(19)

Europäisches
Patentamt
European
Patent Office
Office européen
des brevets

(11) **EP 4 668 922 A1**

(12) **EUROPEAN PATENT APPLICATION**
published in accordance with Art. 153(4) EPC

(43) Date of publication:
**24.12.2025 Bulletin 2025/52**

(21) Application number: **24757320.7**

(22) Date of filing: **16.02.2024**

(51) International Patent Classification (IPC):
*H04W 64/00* (2009.01)     *H04L 5/00* (2006.01)
*G01S 5/00* (2006.01)      *H04W 24/08* (2009.01)

(52) Cooperative Patent Classification (CPC):
**G01S 5/00; H04L 5/00; H04W 24/08; H04W 64/00**

(86) International application number:
**PCT/KR2024/095313**

(87) International publication number:
**WO 2024/172603 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 KR 20230021034**

(71) Applicant: **LG Electronics Inc.**
**Yeongdeungpo-gu**
**Seoul 07336 (KR)**

(72) Inventors:
• **HWANG, Seunggye**
**Seoul 06772 (KR)**

• **KO, Hyunsoo**
**Seoul 06772 (KR)**
• **SHIM, Jaenam**
**Seoul 06772 (KR)**
• **KIM, Kijun**
**Seoul 06772 (KR)**
• **HUH, Joongkwan**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING/RECEIVING WIRELESS SIGNAL IN WIRELESS COMMUNICATION SYSTEM**

(57)     A method by which a terminal transmits a measurement report in a wireless communication system, according to at least one of the embodiments disclosed in the present specification, comprises: measuring a carrier phase for a reference signal for positioning at each of a plurality of points of time; determining one or more reference signal carrier phase difference (RSCPD) values on the basis of the measurement of the carrier phase; and transmitting a positioning-related measurement report including the one or more RSCPD values, wherein each of the one or more RSCPD values can be determined on the basis of points of time at which phase continuity of the terminal is maintained from among the plurality of points of time at which the carrier phase is measured.

**FIG. 17**

Measure carrier phase for reference signal for positioning — B05

Determine at least one RSCPD value — B10

Transmit positioning-related measurement report — B15

**Description**

[Technical Field]

The present disclosure relates to a wireless communication system, and more particularly, to a method and apparatus for transmitting and receiving a wireless signal.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the disclosure is to provide a method and device for transmitting or receiving signals more accurately and efficiently in a wireless communication system.

The objects of the disclosure are not limited thereto, and other objects may be inferred from the disclosed embodiments.

[Technical Solution]

In one aspect of the present disclosure, a method of transmitting a measurement report by a terminal in a wireless communication system may include measuring a carrier phase for a reference signal for positioning at each of a plurality of time points, determining at least one reference signal carrier phase difference (RSCPD) value based on the measurement of the carrier phase, and transmitting a positioning-related measurement report containing the at least one RSCPD value, wherein each of the at least one RSCPD value may be determined based on time points at which phase continuity of the terminal is maintained among the plurality of time points at which the carrier phase is measured.

The terminal may determine that the phase continuity is maintained for time points belonging to a time interval in which a change in an initial phase error is less than a threshold.

The time points at which the phase continuity is maintained may include a reference time point,

Each of the at least one RSCPD value may be determined based on a difference between a phase measurement value at the reference time point and a phase measurement value at another time point paired with the reference time point.

The reference time point may be a time point at which the reference signal for positioning is received from a reference transmission and reception point (TRP) among one or more TRPs transmitting the reference signal for positioning.

A number of symbols included in a time gap between the reference time point and the another time point may be less than or equal to a specific number.

The terminal may determine that the phase continuity is not maintained based on at least one of (i) uplink transmission on an unpaired spectrum, (ii) downlink reception scheduling or downlink monitoring occurring between two time points for phase measurement, or (iii) downlink frequency hopping or downlink bandwidth part switching occurring between the two time points for the phase measurement.

The measurement report may contain identification information related to a reference RS resource related to the at least one RSCPD value.

The reference RS resource is the same for all of the at least one RSCPD value.

In another aspect of the present disclosure, a processor-readable recording medium having recorded thereon a program for performing the above-described transmission method may be provided.

In another aspect of the present disclosure, a device for wireless communication may include a memory storing instructions, and a processor configured to perform operations by executing the instructions. The operations of the processor may include measuring a carrier phase for a reference signal for positioning at each of a plurality of time points, determining at least one reference signal carrier phase difference (RSCPD) value based on the measurement of the carrier phase, and transmitting a positioning-related measurement report including the at least one RSCPD value, wherein each of the at least one RSCPD value may be determined based on time points at which phase continuity of the device is maintained among the plurality of time points at which the carrier phase is measured.

The device may further include a transceiver.

The device may be a terminal operating in a wireless communication system.

The device may be a processing device configured to control a terminal operating in a wireless communication system.

In another aspect of the present disclosure, a method of receiving, by an apparatus including at least one transmission and reception point (TRP), a measurement report from a terminal in a wireless communication system may include transmitting a reference signal for positioning at a plurality of time points, and receiving, from the terminal, a measurement report related to a carrier phase of the reference signal for positioning measured at each of the plurality of time points. The measurement report may contain at least one reference signal carrier phase difference (RSCPD) value, wherein each of the at least one RSCPD value may be determined based on time points at which phase continuity of the terminal is maintained among the plurality of time points at which the carrier phase is measured.

In another aspect of the present disclosure, a processor-readable recording medium having recorded thereon a program for performing the above-described reception method may be provided.

In another aspect of the present disclosure, An apparatus including at least one transmission and reception point (TRP) may include at least one memory storing instructions, and at least one processor configured to perform operations by executing the instructions. The operations of the at least one processor may include transmitting a reference signal for positioning at a plurality of time points, and receiving, from a terminal, a measurement report related to a carrier phase of the reference signal for positioning measured at each of the plurality of time points. The measurement report may contain at least one reference signal carrier phase difference (RSCPD) value, wherein each of the at least one RSCPD value may be determined based on time points at which phase continuity of the terminal is maintained among the plurality of time points at which the carrier phase is measured.

[Advantageous Effects]

According to an embodiment of the present disclosure, a signal can be more accurately and efficiently transmitted or received in a wireless communication system.

The effects of the disclosure are not limited thereto, and other advantageous effects may be inferred from the disclosed embodiments.

[Description of Drawings]

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIG. 13 is a diagram illustrating phase errors of DL PRSs transmitted through different antennas.

FIG. 14 is a diagram illustrating phase errors of DL PRSs transmitted through different base stations (TRP/TP).

FIG. 15 is a diagram illustrating phase errors of DL PRSs transmitted at different times.

FIG. 16 is a diagram illustrating an RSCPD-related procedure for positioning in a wireless communication system according to an embodiment.

FIG. 17 illustrates a flow of a method of transmitting a measurement report according to an embodiment.

FIG. 18 illustrates a flow of a method of receiving a measurement report according to an embodiment.

FIGS. 19 to 22 illustrate an example of a communication system 1 and wireless devices applicable to the present disclosure.

[Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

As used herein, the term "base station" may be replaced by terms such as fixed station, Node B, gNode B (gNB), Access Point (AP), cell, or transmission and reception point (TRP). The term relay may be replaced by terms such as relay node (RN), relay station, and the like. Also, the term "terminal" may be replaced by terms such as user equipment (UE), mobile station (MS), mobile subscriber station (MSS), subscriber station (SS), and the like.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation

- 38.212: Multiplexing and channel coding

- 38.213: Physical layer procedures for control

- 38.214: Physical layer procedures for data

- 38.215: Physical layer measurements

- 38.300: NR and NG-RAN Overall Description

- 38.304: User Equipment (UE) procedures in idle mode and in RRC Inactive state

- 38.321 Medium Access Control (MAC) protocol specification

- 38.331: Radio Resource Control (RRC) protocol specification

- 37.213: Introduction of channel access procedures to unlicensed spectrum for NR-based access

- 36.355: LTE Positioning Protocol

- 37.355: LTE Positioning Protocol

Terms and Abbreviations

- 5GC: 5G Core Network

- 5GS: 5G System

- AoA: Angle of Arrival

- AP: Access Point

- CID: Cell ID

- E-CID: Enhanced Cell ID

- GNSS: Global Navigation Satellite System

- GPS: Global Positioning System

- LCS: LoCation Service

- LMF: Location Management Function

- LPP: LTE Positioning Protocol

- MO-LR: Mobile Originated Location Request

- MT-LR: Mobile Terminated Location Request

- NRPPa: NR Positioning Protocol A

- OTDOA: Observed Time Difference Of Arrival

- PDU: Protocol Data Unit

- PRS: Positioning Reference Signal

- RRM: Radio Resource Management

- RSSI: Received Signal Strength Indicator

- RSTD: Reference Signal Time Difference

- ToA: Time of Arrival

- TP: Transmission Point

- TRP: Transmission and Reception Point

- UE: User Equipment

- SS: Search Space

- CSS: Common Search Space

- USS: UE-specific Search Space

- PDCCH: Physical Downlink Control Channel

- PDSCH: Physical Downlink Shared Channel;

- PUCCH: Physical Uplink Control Channel;

- PUSCH: Physical Uplink Shared Channel;

- DCI: Downlink Control Information

- UCI: Uplink Control Information

- SI: System Information

- SIB: System Information Block

- MIB: Master Information Block

- RRC: Radio Resource Control

- DRX: Discontinuous Reception

- RNTI: Radio Network Temporary Identifier

- CSI: Channel state information

- PCell: Primary Cell

- SCell: Secondary Cell

- PSCell: Primary SCG (Secondary Cell Group) Cell

- CA: Carrier Aggregation

- WUS: Wake up Signal

- TX: Transmitter

- RX: Receiver

- RSTD: Reference Signal Time Difference

- RS: Reference Signal

- PRS: Positioning Reference Signal

- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

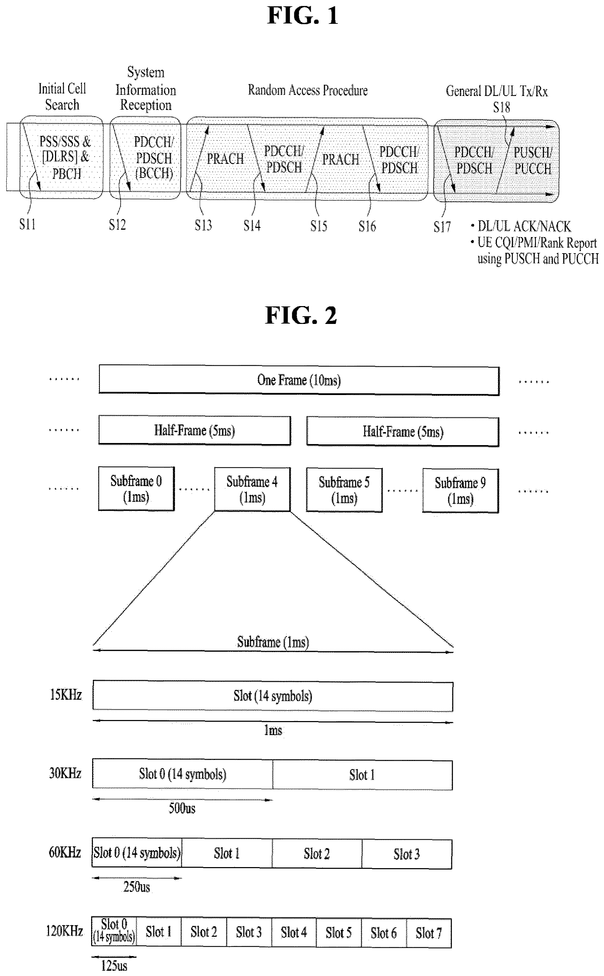

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS $(15*2^u)$ | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot $N^{frame,u}_{slot}$: Number of slots in a frame $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS $(15*2^u)$ | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

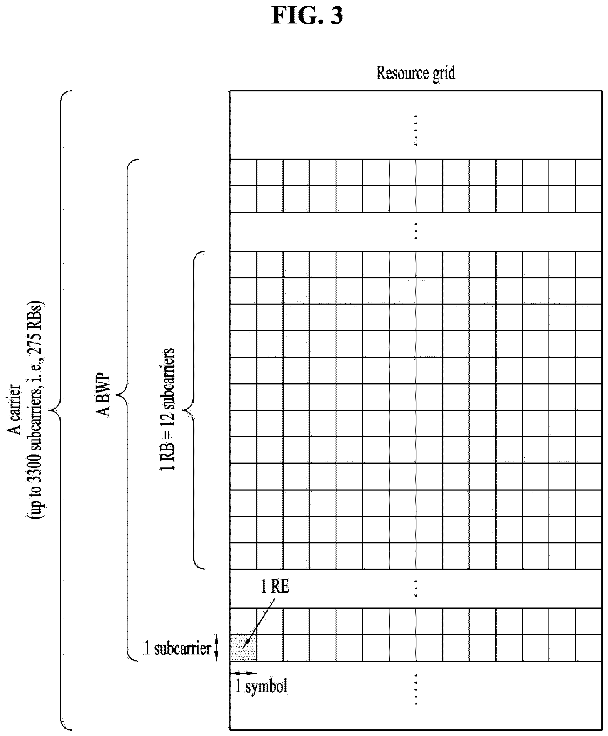

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

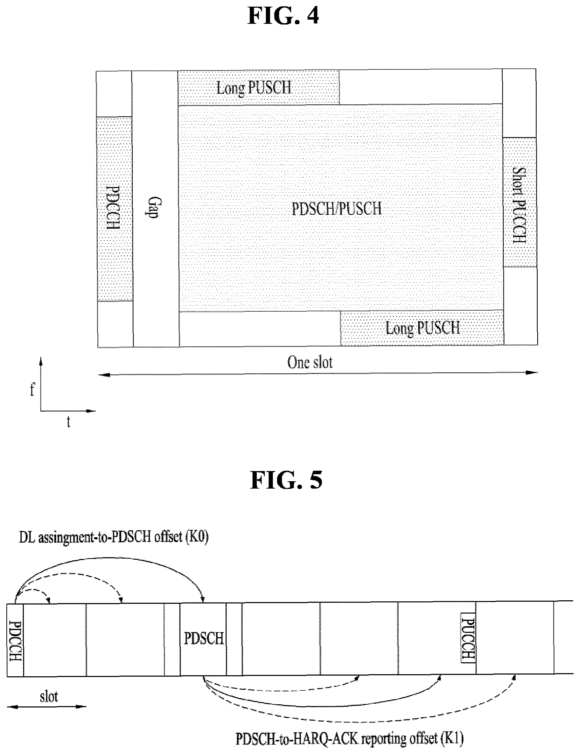

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

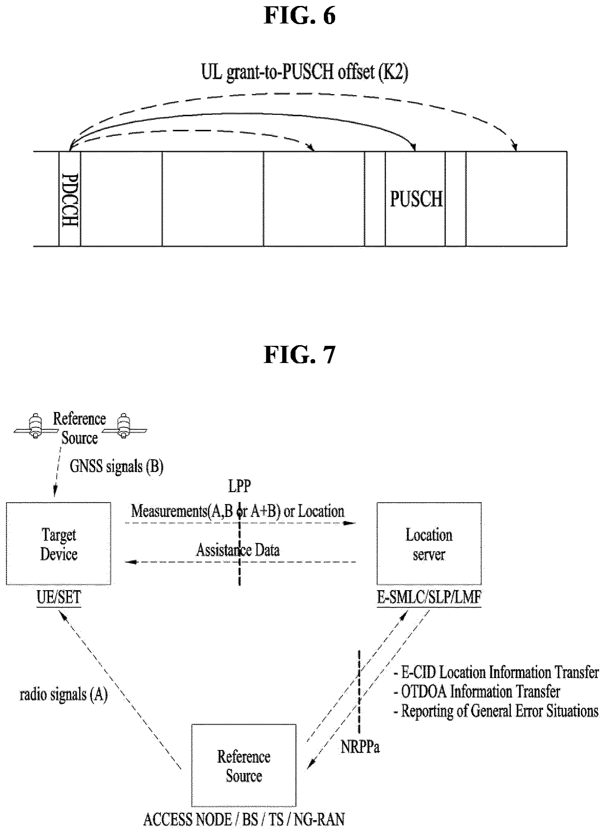

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

-   E-CID Location Information Transfer. This function allows the reference source to exchange location information with the LMF for the purpose of E-CID positioning.

- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

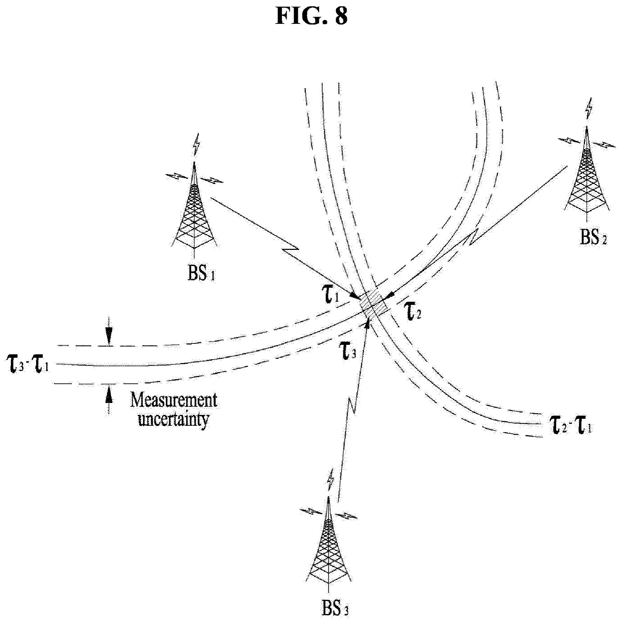

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi,_1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i$-$T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

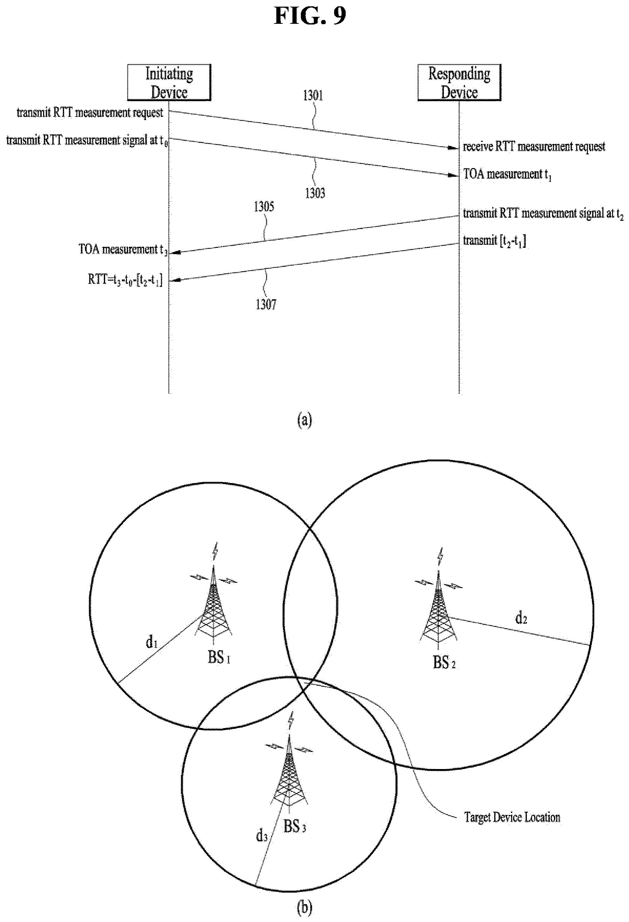

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN Positioning Architecture and Procedures

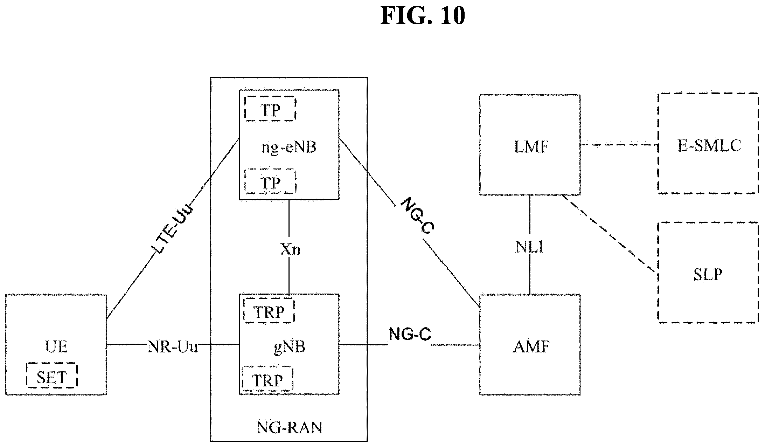

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

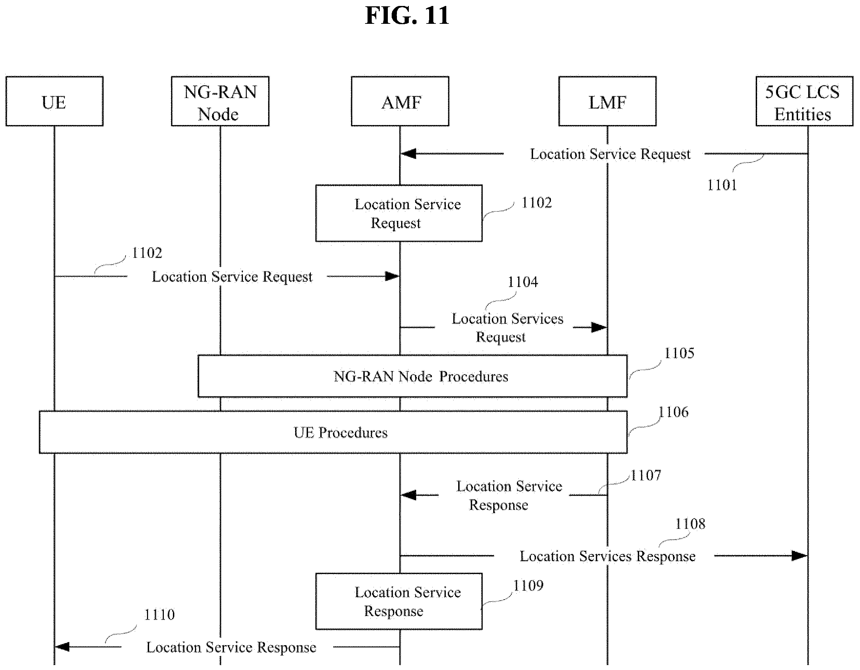

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

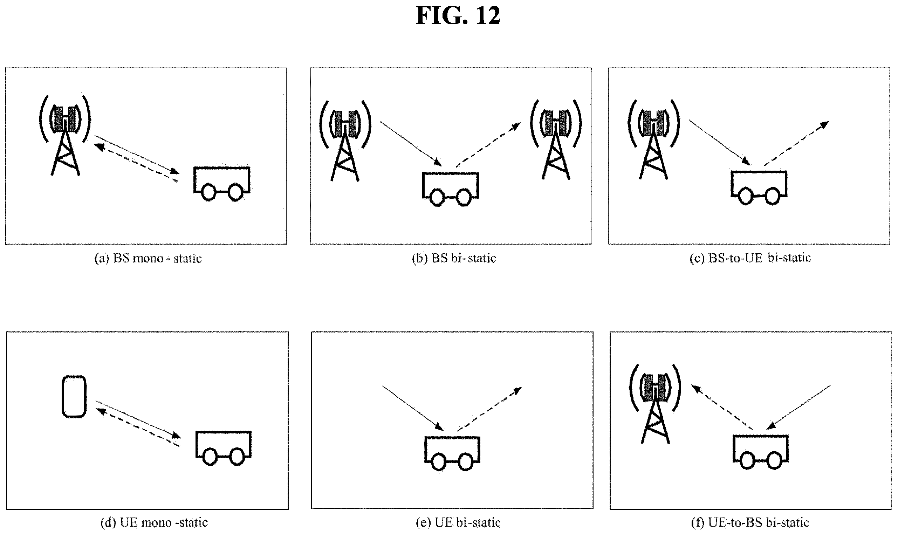

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: ABS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: ABS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.
(2) Environment monitoring: This scenario aims to collect information on the surrounding environment of transmitting/receiving nodes. For example, the following scenarios: rainfall observation and flood detection may be considered.
(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

The proposals discussed below are also applicable to the ISAC environment described above.

**DL RSPD measurement related to CPP**

In NR, various techniques may be used to perform positioning, including timing-based methods (e.g., DL-TDOA, UL-RTOA, Multi RTT), angle-based methods (e.g., AoA, AoD), and cell ID-based methods (e.g., E CID).

In Rel 18, the introduction of Carrier Phase Measurement (CPM)-based positioning (hereinafter referred to as CPP) is under discussion. In CPP, phase measurement may be performed/utilized based on the carrier frequency of the received signal in order to measure the propagation delay of the reference signal resulting from the distance between the BS and the UE.

For CPP, a positioning method that utilizes phase measurements at the carrier frequency is considered. Given that highfrequency carrier waves are generally used, the information about the distance obtained through phase measurements may be highly precise. For example, when a carrier frequency of 3 GHz is used to transmit and receive reference signals, one wavelength over which the phase shifts from 0 to $2\pi$ is approximately 9.99 cm. Therefore, the precision of the distance that may be distinguished through phase measurements may be at the centimeter level. However, to ensure such precise positioning, it is necessary to consider the effects of phase errors, which may influence phase measurements. Phase errors may arise from various causes, such as the implementation precision of the transmitter and receiver, transient errors occurring in hardware devices, channel conditions caused by mobility of the transmitter and receiver and multipath environments, and inaccurate prior information. The phase errors may affect the results of phase measurements and significantly degrade positioning accuracy.

To mitigate/compensate for the effects of phase errors and improve the accuracy of CPP, a differencing method may be used, which utilizes the differences between multiple received measurements. For example, two phase measurements affected by phase errors may be considered as follows.

[Equation 3]

$$\phi^1{}_k = \phi^1{}_{tx} - \phi^1{}_{rx} - 2\pi(f_c + k\Delta f)\tau_0 + \eta^1{}_k$$

$$\phi^2{}_k = \phi^2{}_{tx} - \phi^2{}_{rx} - 2\pi(f_c + k\Delta f)\tau_0 + \eta^2{}_k$$

In Equation 3, $\Phi^i{}_k$ denotes the phase measurement on the k-th subcarrier of the signal received by the i-th node, and $\Phi^i{}_{tx}$ and $\Phi^i{}_{rx}$ denote the effects of the initial phase error acting on the signal received by the i-th node. $f_c$ and $\Delta f$ denote the carrier frequency and the magnitude of subcarrier spacing (SCS), respectively, and $\eta^i{}_k$ denotes errors caused by factors such as additive white Gaussian noise (AWGN). If the above phase measurements are subjected to the same initial reception phase error (i.e. $\Phi^1{}_{rx}=\Phi^2{}_{rx}$), the influence of $\Phi^i{}_{rx}$ may be eliminated using a differencing method which takes the difference between $\Phi^1{}_k$ and $\Phi^2{}_k$, and the influence of $\Phi^i{}_{tx}$ may also be eliminated using the same concept.

A UE receiving a DL PRS transmitted by the BS may use the form of a Reference Signal Phase Difference (RSPD) to perform a phase measurement and report the measurement. Specifically, RSPD measurement may be a method of estimating the difference between phase measurements for a TRP (or PRS resource) and reporting the same. On the condition that the phase measurements have the same initial reception phase error, RSPD measurement presents a value obtained by removing the initial reception phase error through the differencing method.

Canceling the phase error using the differencing method may be very useful for obtaining precise phase measurements, but it requires that a pair of different phase measurements for which the same phase error may be assumed should be used. One type of phase error that may generally be assumed at the transmitting and receiving sides is the unpredictable initial phase error that may occur in the oscillators of the transmitting and receiving sides. Different values of initial phase error may be produced for transmitted and received signals resulting from different oscillators. Even when the same oscillator is used, there may be a difference between signals generated/measured at different times.

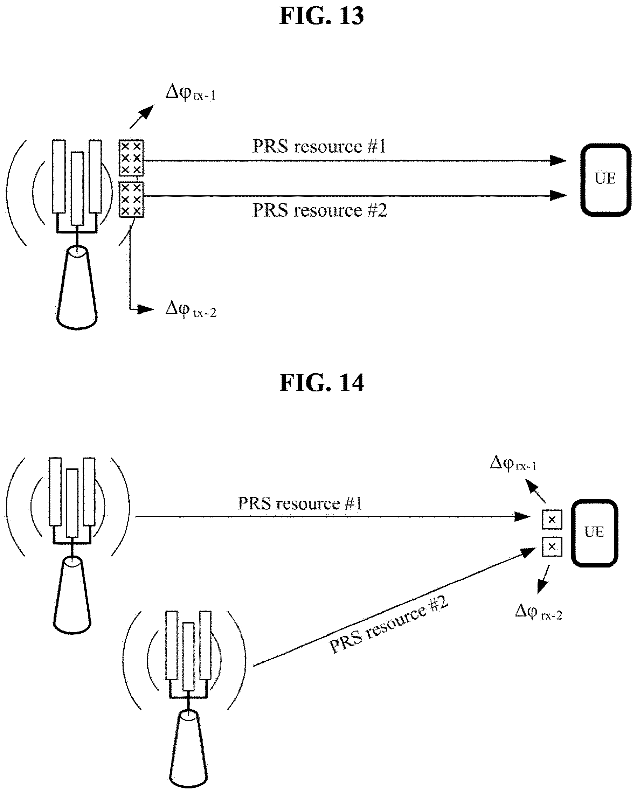

FIG. 13 is a diagram illustrating phase errors of DL PRSs transmitted through different antennas.

In the example illustrated in FIG. 13, the DL PRS is transmitted from the BS (or TRP/TP), and PRS resources are transmitted through different antennas. In this case, different initial phase errors may occur at the antenna through which PRS resource #1 is transmitted and the antenna through which PRS resource #2 is transmitted. If the differencing method is not used, the positioning result obtained using PRS resource #1 and the positioning result obtained using PRS resource #2 may differ from each other due to the influence of different initial transmission phase errors. When the differencing method is used, using a pair of phase measurements obtained through PRS resource #1 and PRS resource #2 the purpose of eliminating the initial transmission phase errors may not be desirable because the influence of the initial transmission phase errors is not completely canceled out.

FIG. 14 is a diagram illustrating phase errors of DL PRSs transmitted through different base stations (TRP/TP).

In the example illustrated in FIG. 14, DL PRSs are transmitted from different BSs (TRPs/TPs), and the receiver receives the respective PRSs resources through different antennas. In this case, different initial phase errors may occur at the antenna through which PRS resource #1 is received and the antenna through which PRS resource #2 is received. If the differencing method is not used, different initial reception phase errors may occur in the positioning results obtained through PRS resource #1 and the positioning results obtained using PRS resource #2. When the differencing method is used, using a pair of phase measurements obtained through PRS resource #1 and PRS resource #2 for the purpose of eliminating the initial phase errors may not be desirable because the influence of the initial phase errors is not completely canceled out.

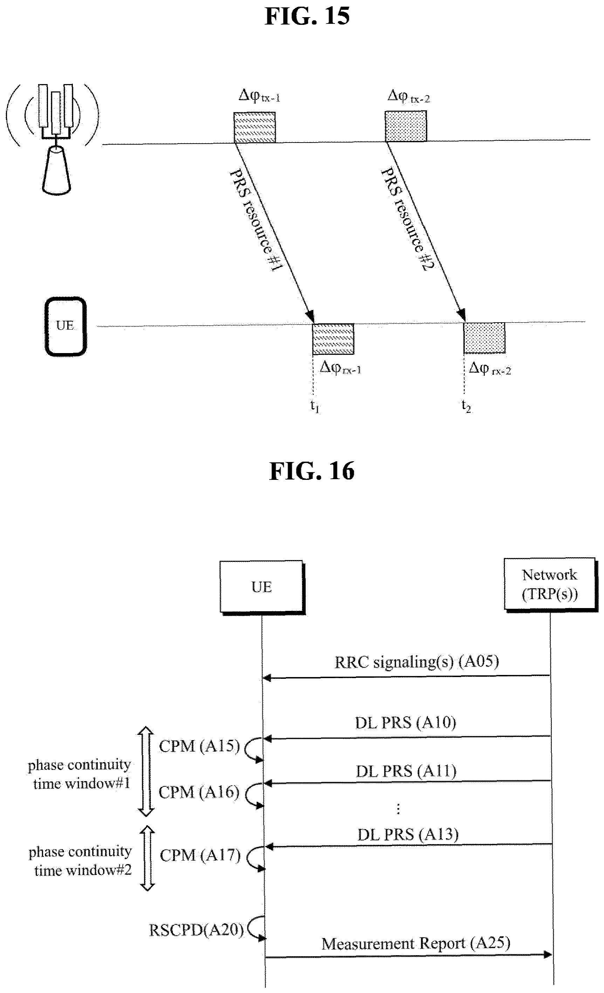

FIG. 15 is a diagram illustrating phase errors of DL PRSs transmitted at different times.

Referring to FIG. 15, DL PRSs are transmitted from the same BS (TRP/TP) at multiple timings and received by the receiver. In this regard, different initial phase errors may occur at the time t1 when PRS resource #1 is received and the time t2 when PRS resource #2 is received. Because different initial transmission and reception phase errors may occur in the phase measurement of PRS resource #1 and the phase measurement of PRS resource #2, use of the differencing method that utilizes the measurements in pair may not be suitable.

Considering such situations, the present disclosure proposes a method that is advantageous for attenuating/-canceling the effects of initial transmission/reception phase errors when a UE performs phase measurement for a specific frequency index (e.g., carrier frequency) based on the received DL PRS and reports the RSPD measurement.

In the following description, the reference signal carrier phase difference (RSPD) may also be referred to as reference signal carrier phase difference (RSCPD).

While the following description focuses on the proposed methods based on CPM-based positioning techniques according to a 3GPP NR system, embodiments are not limited thereto. The methods may also be applied to other positioning methods capable of estimating the distance or direction between the transmitter and the UE. The proposed methods may be applied to all types of transmission/reception methods and positioning techniques expected between the BS and the UE.

For simplicity, the proposed methods will be described below focusing on performing phase measurement based on the carrier frequency of DL PRS and calculating RSPD measurement therethrough in the 3GPP NR system, primarily. However, the present disclosure is not limited thereto. The present disclosure may be applied to all types of reference signals (e. e.g., CSI-RS, DMRS, SSB, UL SRS, etc.) and methods for measuring the same, as well as cases where reports thereon are provided by the BS or UE.

For simplicity, it is assumed that the transmitter is a BS and the receiver is a UE. Also, considering a structure where the UE receives the PRS transmitted by the BS, the proposed method will be described, in which the UE measures a phase value using the received PRS, and reports the result of the calculated phase measurement to an upper node (e.g., LMF or BS). The proposed method may also be applied when the transmitter is the UE and the receiver is the BS, or when both the transmitter and receiver are UEs (or BSs). It may also be applied when the reference signal used for transmission/reception, and phase measurement is SRS or SL PRS.

The proposed methods may be implemented independently or one or more thereof may be implemented in combination. Some terms, symbols, and sequences used herein may be replaced with other terms, symbols, or sequences as long as the principles of the present disclosure are maintained.

To support the positioning method of CPP, proposed herein is a measurement and reporting method that considers the characteristics of initial phase errors in the process of the UE obtaining and reporting RSPD measurements.

## [Proposal 1] Reporting RSPD measurement considering different initial transmission phase errors for PRS resources

The present disclosure proposes determination of a pair of PRS resources used for RSPD measurement and related operations of an upper node and a UE considering a difference in initial phase error between different PRS resources when the UE performs phase measurement for DL PRSs transmitted/received by TRPs, obtains RSPD measurement based thereon, and reports the RSPD measurement to the upper node (e.g., BS or LMF).

When RSPD measurement is used for positioning, the UE may need to perform and, when necessary, report RSPD measurements for multiple TRPs located at different positions. In this case, at least one TRP serving as a reference (i.e., reference TRP) may be configured/selected, and the RSPD measurements may be calculated based on the phase measurement for the PRS resources transmitted from the reference TRP and received by the UE. If there is a difference in the initial phase error between the PRS resources transmitted from the reference TRP and received by the UE, the influence of the initial phase error may vary depending on the PRS resource selected by the UE, which may cause an error in the positioning result. For example, when the transmission and reception of signals/channels using multiple antennas at each TRP is supported and a different PRS resource is transmitted through each antenna or antenna element group (or panel), different initial phase errors may occur for the transmitted PRS resources.

For example, in UE-assisted positioning, in which a differencing method is used to eliminate initial transmission phase errors (i.e., the UE reports the measurement results and the LMF performs the positioning calculation), the LMF may require information about the PRS resources used by the UE for RSPD measurements in order to take into account the effects of different initial phase errors. Additionally, in UE assisted positioning, signaling and reporting may be required for the UE to select PRS resources that are favorable either for positioning by the LMF or for UE-based positioning (i.e., a method in which the UE directly uses the measurement results to perform positioning). Particularly, based on the Rel-17 standard, the current standard does not define a method to provide information about the PRS resources of the reference TRP used by the UE for each measurement for positioning when different PRS resources are selected on the reference TRP to perform measurements for positioning. Therefore, to improve positioning performance, a new method needs to be introduced.

Taking this need into consideration, the present disclosure proposes criteria for selecting a PRS resource of the reference TRP used by the UE to calculate the RSPD measurement, and related signaling and reporting methods in the examples described below. One or more of the methods disclosed below may be used in combination.

[Proposal 1-1] Reporting PRS resource ID of the reference TRP used for RSPD measurements

As a specific example of Proposal 1, the UE may select a PRS resource to be used as a reference in calculating the RSPD measurement and report the ID information related thereto along with the RSPD measurement. In this case, the selection of the PRS resource to be used as a reference may be determined within the range of PRS resources transmitted/received by the TRP selected as a reference TRP. The PRS resources may have a PRS resource ID set for the same TRP ID (e.g., dl-PRS-ID defined in TS 37.355) (e.g., NR-DL-PRS-ResourceID defined in the TS 37.755 standard).

As a specific example of Proposal 1-1, the UE may designate one of the PRS resources belonging to the determined reference TRP as a common reference PRS resource of the reference TRP. Then, the UE may perform multiple RSPD measurements based on the common reference PRS resource of the reference TRP. Based on the measurements, the UE may perform positioning (e.g., UE based positioning), or send a report to an upper node (e.g., UE assisted positioning). When the UE reports the results of RSPD measurements to the upper node as in UE assisted positioning, the UE may apply the common reference PRS resource of the same reference TRP to all RSPD measurements included in a single measurement report and report the information indicating the PRS resource ID used as the common reference together with information about the reference TRP. Upon receiving the information, the upper node may identify information indicating the PRS resource ID used as the common reference for all RSPD measurements included in the single report based on the information about the common reference PRS resource of the reference TRP reported by the UE and perform positioning based on the identified information. With this method using a common reference PRS resource, signaling overhead for the reference PRS resource may be relatively reduced because only the PRS resource ID information commonly used for all RSPD measurements is reported.

As another specific example of Proposal 1-1, the UE may use different PRS resources as the reference PRS resources for different RSPD measurement. In this case, the PRS resource to select may be determined from among the PRS resources belonging to the same reference TRP. This means that the UE is allowed to select a reference PRS resource within the range of PRS resources having the same TRP ID, and unless otherwise indicated or conditioned, it is not necessarily required to use different PRS resources. The UE may select one of the PRS resources transmitted from the reference TRP for each RSPD measurement as the reference PRS resource, perform a measurement based on the selected resource, and perform positioning (e.g., UE based positioning) or send a report to an upper node (e.g., UE assisted positioning) based on the measurement. When reporting the results of RSPD measurements to the upper node as in UE assisted positioning, the UE may select and apply either the same or different reference PRS resources to each RSPD measurement included in a single measurement report and report the PRS resource ID information used as the reference along with the information related to each RSPD measurement. Upon receiving the report, the upper node may check the PRS resource ID used as the reference for each RSPD measurement included in the single measurement report based on the reference PRS resource ID related to each RSPD measurement reported by the UE, and perform positioning based on the identified information. Allowing a reference PRS resource to be selected for each RSPD measurement may provide flexibility in determining and utilizing reference PRS resources suitable for the PRS resource configuration situation, as the UE may be allowed to select available (or appropriate) PRS resources based on the timing of phase measurement.

The specific examples described above may be used in combination. For example, a UE performing UE assisted positioning may determine the common reference PRS resource of the reference TRP and report information thereabout. For RSPD measurements for which no additional information is provided, the common reference PRS resource of the reference TRP may be applied. For some RSPD measurements, reference PRS resources other than the common reference PRS resource of the reference TRP may be applied, and information about the PRS resource ID used as the reference for these RSPD measurements may be reported. When a separate reference PRS resource ID reported in association with the received RSPD measurement is applied, the upper node may use the same for interpretation of the RSPD measurement. For other RSPD measurements where this is not the case, the upper node apply the information about the common reference PRS resource of the reference TRP to interpret the information about the RSPD measurements.

To this end, the upper node may provide recommendation information related to the PRS resource(s) to be used as a reference to the UE through assistance information. The recommendation information may be provided per TRP, PRS resource set, and/or individual PRS resource. The UE may determine the reference PRS resource among the PRS resource(s) included in the received recommendation information. Alternatively, the UE may select PRS resource(s) not included in the recommendation information based on its own detemination. In this case, if multiple PRS resources are selected as references, the selected PRS resources may be constrained to belong to the same TRP.

As a specific example, the UE may receive assistance data related to the reference PRS resource(s) from the location server (e.g., LMF) through the LPP and use the same for phase measurement. The UE may select the reference TRP in consideration of the assistance data received from the location server and the wireless channel environment, and determine the reference PRS resource(s) based on the PRS resource(s) belonging thereto. The UE may perform RSPD measurements using the reference PRS resource(s) and report the selected reference PRS resource ID and the information about the RSPD measurements to the location server through the LPP. The location server may provide assistance data related to the reference PRS resource(s) to the UE through the LPP. Then, the location server may receive the measurement report transmitted by the UE, check the information about the reference PRS resource(s) included in the received measurement report, acquire the information about the reference PRS resource(s) applied to each RSPD measurement, and perform positioning based on the acquired information.

Proposal 1-1 may provide advantages in improving positioning accuracy based on CPP with methods to reduce the influence of the initial transmission phase error of the TRP. In addition, since it uses PRS resource IDs defined for existing NR positioning, it may minimize the increase in signaling overhead.

[Proposal 1-2] Determination and reporting of RSPD target according to the transmission PEG (phase error group)

As a specific example of Proposal 1, the UE may configure the transmission PEG (phase error group) of the TRP, select, based on the information about the configuration, PRS resources used to calculate the RSPD measurement, and report the information about the transmission PEG of the TRP along with the RSPD measurement. The s selection of the PRS resource used as a reference may be determined in consideration of the transmission PEG of the TRP within the range of PRS resources transmitted/received by the TRP selected as the reference TRP. The PEG may correspond to a transmission PEG ID set for the same TRP ID (e.g., d1-PRS-ID defined in the TS 37.355 standard).

The transmission PEG of the TRP may be defined as a set of PRS resources for which the UE and/or upper node may assume that the initial phase error of DL PRS resources transmitted by the TRP at the same time or within a certain period remains the same. Alternatively, it may be defined as a set of PRS resources for which the UE and/or upper node may assume that the difference in initial phase error of the DL PRS resources transmitted by the TRP at the same time or within a certain period may be guaranteed to be within a certain margin.

For example, the transmission PEG may be distinguished by a transmission PEG ID. PRS resources to which the same transmission PEG ID and the same TRP ID (and PRS resource set ID) are assigned may belong to the same transmission PEG. PRS resources that do not meet this condition may not be assumed to belong to the same transmission PEG. As an additional condition, the assumption of the same transmission PEG, if specified, may be allowed only among PRS resources configured with the same timing error group (TEG). With this method, the UE may report the transmission PEG ID of the PRS resources used as a reference for the RSPD measurement during the measurement reporting operation.

As another example, for each TRP (or for specific TRPs), the upper node may designate one group of PRS resources that may be selected as reference PRS resources under the assumption of transmission PEG and provide the information about the group to the UE. As an additional condition, the assumption of the same transmission PEG, if specified, may be allowed only among PRS resources configured with the same timing error group (TEG). With this method, during the measurement reporting operation, the UE may report whether the transmission PEG has been considered in selecting PRS resources used as a reference for the RSPD measurement or, without a separate report, may be required to select PRS resources under the assumption of a transmission PEG.

As a specific example of Proposal 1-2, the UE may determine, based on the determined reference TRP, the common reference transmission PEG of the reference TRP within a single transmission PEG and select and use an appropriate PRS resource therein. When there are multiple transmission PEGs configured for a single TRP, the UE may report the transmission PEG ID of the transmission PEG determined as the common reference transmission PEG of the reference TRP. When there is a single transmission PEG configured, no separate reporting may be performed. In this case, the UE may select PRS resources to be used as a reference for each RSPD measurement within the range of the PRS resource(s) included in the common reference transmission PEG of the reference TRP. Based on the selected PRS resources, it may perform positioning (e.g., UE based positioning) or send a report to an upper node (e.g., UE assisted positioning). When reporting the results of RSPD measurements to the upper node as in UE assisted positioning, the UE may apply the common reference transmission PEG of the same reference TRP to all RSPD measurements included in the single measurement report. In this case, information about the transmission PEG used as the common reference (i.e., whether reference PRS resource selection considering the transmission PEG ID or the transmission PEG has been applied) may be reported together with the information about the reference TRP, as needed. Upon receiving the information, the upper node may check the information of the transmission PEG ID used as the common reference for all RSPD measurements included in the single measurement report based on the information about the common reference transmission PEG of the reference TRP reported by the UE, and perform positioning based on the checked information.

As another specific example of Proposal 1-2, the UE may use different transmission PEGs for PRS resources used as references for each RSPD measurement. In this case, the selected PRS resources may be determined from among the PRS resources belonging to the same reference TRP. This means that the UE is allowed to select reference PRS resources from within the range of PRS resources having the same TRP ID, and unless otherwise indicated or conditioned, it is not necessarily required to use different PRS resources. The UE may select one of the PRS resources transmitted from the reference TRP for each RSPD measurement as the reference PRS resource, perform a measurement based on the selected resource, and perform positioning (e.g., UE based positioning) or send a report to an upper node (e.g., UE assisted positioning) based on the result of the measurement and the transmission PEG information. When reporting the results of RSPD measurements to the upper node as in UE assisted positioning, the UE may select and apply either the same or different reference PRS resources to each RSPD measurement included in a single measurement report. The transmission PEGs of the selected reference PRS resources may differ. In this case, the UE may report the transmission PEG ID information for the PRS resources used as the reference along with the corresponding RSPD measurement. Upon receiving the report, the upper node may check the transmission PEG ID used as the reference for each RSPD measurement included in the single measurement report based on the reference transmission PEG ID related to each RSPD measurement reported by the UE, and perform positioning based on the identified information. Allowing a reference PRS resource to be selected for each RSPD measurement may provide flexibility in determining and utilizing reference PRS resources suitable for the PRS resource configuration situation, as the UE may be allowed to select available (or appropriate) PRS resources based on the timing of phase measurement.

The specific examples described above may be used in combination. For example, a UE performing UE assisted positioning may determine the common reference transmission PEG of a reference TRP and report the corresponding information. For RSPD measurements for which no additional information is provided, the common reference transmission PEG of the reference TRP may be applied. For some RSPD measurements, reference PRS resources not belonging to the common reference transmission PEG of the reference TRP may be applied. For these RSPD measurements, information about the transmission PEG ID used as the reference (or information about the PRS resource ID if only a single transmission PEG is configured and there are selected PRS resources not belonging to the single transmission PEG) may also be reported. In this case, if a separate reference transmission PEG ID reported in association with the received RSPD measurement is applied (or a separate reference PRS resource ID is applied), the upper node may utilize the same to interpret the RSPD measurement. Otherwise, the information about the common reference transmission PEG of the reference TRP may be applied to interpret the RSPD measurements.

To this end, the upper node may provide the UE with configuration information related to the transmission PEG configured for each TRP. The configuration information related to the transmission PEG may be provided for each TRP, PRS resource set, and/or PRS resource. If a transmission PEG ID is provided, the upper node may assign a transmission PEG ID for each resource (e.g., TRP, PRS resource set, and/or PRS resource) and provide corresponding information to the UE. If a single transmission PEG is assigned to the TRP, the upper node may indicate whether each resource (e.g., TRP, PRS resource set, and/or PRS resource) is included in the transmission PEG and provide corresponding information to the UE, or may configure a list of PRS resource IDs belonging to the transmission PEG and provide information about the same to the UE.

To this end, the upper node may provide the UE with recommendation information related to the transmission PEG(s) to be used as a reference to the UE through assistance information. The UE may determine the transmission PEG(s) to be used as a reference within the range of the transmission PEG(s) included in the received recommendation information. Alternatively, the UE may select a transmission PEG not included in the recommendation information based on its own determination. In this case, when multiple transmission PEGs are selected as references, the selected PRS resources should all belong to the same TRP.

As a specific example, the UE may receive information related to the transmission PEG(s) from a location server (e.g., LMF) through the LPP and use the same for phase measurement. The UE may determine the reference TRP and the transmitted PEG(s) belonging to the reference TRP in consideration of the assistance data received from the location server and the wireless channel environment. The UE may perform RSPD measurements using the PRS resource(s) included in the transmission PEG determined as a reference, and report the information related to the selected transmission PEG (e.g., applicability of the transmission PEG ID or the transmission PEG) and information about the RSPD measurements to the location server through the LPP. The location server may provide the UE with information related to the transmission PEG through the LPP. Thereafter, the location server may receive a measurement report transmitted by the UE, check the transmission PEG related information included in the report, obtain information about the transmission PEG information applied to each RSPD measurement, and perform positioning based on the obtained information.

Proposal 1-2 may provide advantages in improving positioning accuracy based on CPP with methods to reduce the influence of the initial transmission phase error of TRP, and may also provide flexibility in configuring the RSPD measurements of the UE's by providing information about correlation among multiple PRS resources having the same transmission TEG.

[Proposal 1-3] Determination and reporting of RSPD target according to the condition of transmission TEG margin

As a specific example of Proposal 1, the UE may select, based on the information about the transmission TEG, PRS resources used to calculate the RSPD measurement, and report the information about the transmission TEG of the TRP along with the RSPD measurement. The s selection of the PRS resource used as a reference may be determined in consideration of the transmission TEG of the TRP within the range of PRS resources transmitted/received by the TRP selected as the reference TRP. The TEG may correspond to the transmission TEG ID (dl-prs-trp-Tx-TEG-ID defined in TS 37.355 standard) set for the same TRP ID (e.g., dl-PRS-ID defined in TS 37.355 standard).

The transmission TEG of the TRP may be defined as a set of PRS resources for which the UE and/or upper node may assume that the timing error of DL PRS resources transmitted by the TRP at the same time or within a certain period may be guaranteed to be within a certain margin. The concept of the transmission TEG defined in the Rel-16 NR standard may be reused.

As a specific example of Proposals 1-3, when multiple PRS resources may be used to determine the PRS resource used as a reference for RSPD measurement, the selected PRS resources may be allowed only when they belong to a transmission TEG with a configured transmission TEG margin (e.g., TEG-TimingErrorMargin defined in TS 37.355 standard) set to 0 Tc. For example, when a specific PRS resource within a transmission TEG with a transmission TEG margin set to 0 Tc is used as a reference for RSPD measurement within a measurement report for a single positioning, other PRS resources belonging to the same transmission TEG may also be specified to be used as references for RSPD measurement within the same measurement report for positioning. Alternatively, when one of the PRS resources belonging to a transmission TEG with a transmission TEG margin set to values other than 0 Tc is selected as a reference PRS resource for calculating the RSPD measurement, all RSPD measurements in the measurement report for a single positioning may be constrained to use only the selected PRS resource as a reference. Alternatively, a constraint may be imposed such that only PRS resources belonging to the transmission TEG with the transmission TEG margin set to 0 Tc can be selected as reference PRS resources for calculating RSPD measurements.

As a specific example of Proposal 1-3, the UE may determine, based on the determined reference TRP, the common reference transmission TEG of the reference TRP within a single transmission TEG and select and use an appropriate PRS resource therein. When there are multiple transmission TEGs configured for a single TRP, the UE may report the transmission TEG ID of the transmission TEG determined as the common reference transmission TEG of the reference TRP. In this case, the UE may select PRS resources to be used as a reference for each RSPD measurement within the range of the PRS resource(s) included in the common reference transmission TEG of the reference TRP. Based on the selected PRS resources, it may perform positioning (e.g., UE based positioning) or send a report to an upper node (e.g., UE assisted positioning). When reporting the results of RSPD measurements to the upper node as in UE assisted positioning, the UE may apply the common reference transmission TEG of the same reference TRP to all RSPD measurements included in the single measurement report. In this case, information about the transmission TEG used as the common reference (i.e., whether reference PRS resource selection considering the transmission TEG ID or the transmission TEG has been applied) may be reported together with the information about the reference TRP, as needed. Upon receiving the information, the upper node may check the information of the transmission TEG ID used as the common reference for all RSPD measurements included in the single measurement report based on the information about the common reference transmission TEG of the reference TRP reported by the UE, and perform positioning based on the checked information.

As another specific example of Proposal 1-3, the UE may use different transmission TEGs for PRS resources used as references for each RSPD measurement. In this case, the selected PRS resources may be determined from among the PRS resources belonging to the same reference TRP. This means that the UE is allowed to select reference PRS resources from within the range of PRS resources having the same TRP ID, and unless otherwise indicated or conditioned, it is not necessarily required to use different PRS resources. The UE may select one of the PRS resources transmitted from the reference TRP for each RSPD measurement as the reference PRS resource, perform a measurement based on the selected resource, and perform positioning (e.g., UE based positioning) or send a report to an upper node (e.g., UE assisted positioning) based on the result of the measurement and the transmission TEG information. When reporting the results of RSPD measurements to the upper node as in UE assisted positioning, the UE may select and apply either the same or different reference PRS resources to each RSPD measurement included in a single measurement report. The transmission TEGs of the selected reference PRS resources may differ. In this case, the UE may report the transmission TEG ID information for the PRS resources used as the reference along with the corresponding RSPD measurement. Upon receiving the report, the upper node may check the transmission TEG ID used as the reference for each RSPD measurement included in the single measurement report based on the reference transmission TEG ID related to each RSPD measurement reported by the UE, and perform positioning based on the identified information. Allowing a reference PRS resource to be selected for each RSPD measurement may provide flexibility in determining and utilizing reference PRS resources suitable for the PRS resource configuration situation, as the UE may be allowed to select available (or appropriate) PRS resources based on the timing of phase measurement.

The specific examples described above may be used in combination. For example, a UE performing UE assisted positioning may determine the common reference transmission TEG of a reference TRP and report the corresponding information. For RSPD measurements for which no additional information is provided, the common reference transmission TEG of the reference TRP may be applied. For some RSPD measurements, reference PRS resources not belonging to the common reference transmission TEG of the reference TRP may be applied. For these RSPD measurements, information about the transmission TEG ID used as the reference may also be reported. In this case, if a separate reference transmission TEG ID reported in association with the received RSPD measurement is applied (or a separate reference PRS resource ID is applied), the upper node may utilize the same to interpret the RSPD measurement. Otherwise, the information about the common reference transmission TEG of the reference TRP may be applied to interpret the RSPD measurements.

To this end, the upper node may provide the UE with configuration information related to the transmission TEG configured for each TRP. The configuration information related to the transmission TEG may be provided for each TRP, PRS resource set, and/or PRS resource. This means the information may be provided to both UEs performing UE based positioning and UEs performing UE assisted positioning. If a transmission TEG ID is provided, the upper node may assign a transmission TEG ID for each resource (e.g., TRP, PRS resource set, and/or PRS resource) and provide corresponding information to the UE.

As a specific example, the UE may receive information related to the transmission TEG(s) from a location server (e.g., LMF) through the LPP and use the same for phase measurement. The UE may determine the reference TRP and one transmission TEG that satisfies specific conditions (e.g., transmission TEG margin of 0 Tc) among the transmission TEG(s) belonging to the reference TRP in consideration of the assistance data received from the location server and the wireless channel environment. The UE may perform RSPD measurements using the PRS resource(s) included in the transmission TEG determined as a reference, and report the information related to the selected transmission TEG (e.g., transmission TEG ID) and information about the RSPD measurements to the location server through the LPP. The location server may provide the UE with information related to the transmission TEG through the LPP. Thereafter, the location server may receive a measurement report transmitted by the UE, check the PEG related information included in the report, obtain information about the PEG information applied to each RSPD measurement, and perform positioning based on the obtained information.

Proposal 1-3 may provide advantages in improving positioning accuracy based on CPP with methods to reduce the influence of the initial transmission phase error of the TRP. In addition, since it reuses the transmission TEG defined for existing NR positioning, it may reduce the increase in signaling overhead that may separately occur.

**[Proposal 2] Reporting RSPD measurement considering different initial phase errors between reception antennas**

The present disclosure proposes determination of a pair of phase measurements used for RSPD measurement and related operations of an upper node and a UE considering a difference in initial reception phase error between different phase measurements of the UE when the UE performs phase measurements for DL PRSs transmitted and received from TRPs, obtains RSPD measurement based thereon, and reports the RSPD measurement to the upper node (e.g., BS or LMF).

When RSPD measurement is used for positioning, the UE may select two PRS resources (i.e., the PRS resource of the reference TRP and the PRS resource of the target TRP) and measure the RSPD based on the difference between the phase measurements performed using the respective PRS resources. If there is a difference in initial reception phase error between the two phase measurements, the difference may result in an error in the result of positioning. For example, when the UE has multiple antennas and the values of two phase measurements are measured through different antennas, the initial reception phase errors at the two antennas may be different from each other. Even when the same antenna is used for different phase measurements, different initial reception phase errors may be produced if the two phase measurements are taken at different times,.

As an example, a differencing method may be used to eliminate the initial reception phase error. This requires that a pair of phase measurements satisfy the condition that the same initial phase error is assumed or may be guaranteed. The UE may use a pair of phase measurements satisfying the condition to obtain RSPD measurements, or may need a signaling or reporting method to provide the upper node with information indicating whether the same initial reception phase error can be assumed for the phase measurements used for the RSPD measurement. According to the Rel-17 NR standard, the current standard does not support definitions of phase measurements performed by the UE or methods that consider the influence of the initial reception phase error thereon, and a new method needs to be introduced to achieve improved positioning performance at a high level of precision.

Taking this need into consideration, criteria for selecting phase measurements used by the UE to calculate the RSPD measurement, and related signaling and reporting methods are proposed in the following description. Specifically, one or more of the methods disclosed below may be used in combination.

[Proposal 2-1] Determination and reporting of RSPD target according to reception PEG

As a specific example of Proposal 2, the UE may report the configuration information about the reception PEG and information about the capability for the same to the upper node, reflect the information in RSPD measurement to determine a method of receiving and measuring PRS resources, and report the resulting RSPD measurement and related information together.

The reception PEG of the UE may be defined as a set of PRS resources for which the UE and/or upper node may assume that the initial reception phase error that may occur in the phase measurement of DL PRS resources received by the UE at the same time or within a certain period remains the same. Alternatively, it may be defined as a set of PRS resources for which the UE and/or upper node may assume that the difference in initial reception phase error that may occur in the phase measurement of DL PRS resources received by the UE at the same time or within a certain period may be guaranteed to be within a certain margin.

A reception PEG may represent a group of phase measurements for which it may be assumed that the same initial reception phase error occurs, or the difference in initial reception phase error remains within a certain margin within the same time (or period). This may be intended to take into account the characteristics of the initial reception phase errors resulting from the antenna properties of the UE. Each reception PEG may be assigned a reception PEG ID for distinction. In addition, each reception PEG may have a set value of the reception PEG margin, which may be used to indicate the range of the initial reception phase errors that may occur among phase measurements belonging to the same PEG.

In performing a measurement report for positioning that includes RSPD measurement, the UE may report the reception PEG ID used for the RSPD measurement. The reported reception PEG ID to be reported may include both a reception PEG ID corresponding to a reference phase measurement used for calculation of the RSPD measurement and a reception PEG ID corresponding to a target phase measurement. In special cases, for example, when a pair of phase measurements with the same reception PEG ID is used to calculate an RSPD measurement, the reporting of the reception PEG ID for the RSPD measurement may be omitted. This may be intended to support the upper node to utilize the information about the PEG for positioning by providing the information to the upper node.

Alternatively, the UE may select only a pair of phase measurements for which the same reception PEG may be assumed in order to calculate the RSPD measurement. This may be intended to exclude cases where an initial phase error exceeding the reception PEG margin occurs in the RSPD measurement.

To this end, the UE may report information related to the reception PEG to the upper node. For example, the information related to the reception PEG may include a reception PEG ID, the size of a corresponding reception PEG margin, and/or the number of PEGs used by the UE. Additionally, the upper node may determine and provide recommendation information about the operation of the UE related to the reception PEG. For example, the recommendation information may be in the form of assistance data and may include the number of PEGs and the size of the reception PEG margin.

As a specific example, the UE may receive information related to the reception PEG(s) from the location server (e.g., LMF) through the LPP and utilize the same for phase measurement. Considering the assistance data received from the location server and the wireless channel environment, the UE may acquire phase measurements of a PEG having a specific reception PEG margin and calculate the RSPD measurement based thereon. Subsequently, the UE may report the calculated RSPD measurements and PEG-related information to the location server through the LPP. The location server may provide information related to the reception PEG(s) to the UE through the LPP. Thereafter, the location server may receive the measurement report transmitted by the UE, check the reception PEG-related information included in the received measurement report, acquire information about the reception PEG applied to each RSPD measurement, and perform positioning based on the information.

Proposal 2-1 may provide a favorable structure for configuring RSPD measurements that cancels/attenuates the effects of the initial reception phase error of the UE, and also provide information that may be used by the entity (e.g., LMF or UE) ultimately performing positioning to improve positioning accuracy.

[Proposal 2-2] Determination and reporting of RSPD target according to the condition of reception TEG margin

As a specific example of Proposal 2, the UE may report the configuration information about the reception TEG and information about the capability for the same to the upper node, reflect the information in RSPD measurement to determine a method of receiving and measuring PRS resources, and report the resulting RSPD measurement and related information together.

The reception TEG of the UE may be defined as a set of phase measurements for which the UE and/or upper node may assume that the timing error that is likely to occur in the phase measurements acquired for DL PRS resources received by the UE may be guaranteed to be within a certain margin. The concept of the reception TEG defined in the Rel-16 NR standard may be reused.

As a specific example of Proposal 2-2, when selecting a pair of phase measurements to be used for calculation of the RSPD measurement, only phase measurements with the same reception TEG ID (e.g., nr-UE-Rx-TEG-ID defined in TS 37.355) may be allowed. As a specific example, when information about the reception TEG ID of the phase measurement used as a reference is included and reported in a measurement report for a single positioning, the same reception TEG ID may be applied to all phase measurements used for calculation of the RSPD measurement included in the measurement report for that positioning. Alternatively, when information about the reception TEG ID of the phase measurement used as a reference is included and reported in a measurement report for a single positioning, and configuration of another reception TEG ID is allowed for specific RSPD measurement(s), the UE may also report the reception TEG ID of the target phase measurement for the RSPD measurements. Alternatively, when for each RSPD measurement, corresponding reception TEG ID information related to the target phase measurement may be reported. In this case, the BS and UE may calculate the RSPD measurement, assuming that assume that the reception TEG of the phase measurement used as a reference is the same as the corresponding reception TEG ID.

To this end, the UE may report information related to the reception TEG to the upper node. For example, the information related to the reception TEG may include a reception TEG ID, the size of a corresponding reception TEG margin, and/or the number of TEGs used by the UE. Additionally, the upper node may determine and provide recommendation information about the operation of the UE related to the reception TEG. For example, the recommendation information may be in the form of assistance data and may include the number of reception TEGs and the size of the reception TEG margin.

As a specific example, the UE may receive assistance data information related to the reception TEG(s) from the location server (e.g., LMF) through the LPP and utilize the same for phase measurement. Considering the assistance data received from the location server and the wireless channel environment, the UE may acquire a pair of phase measurements having a specific reception TEG and calculate the RSPD measurement based thereon. Subsequently, the UE may report the calculated RSPD measurements and TEG-related information to the location server through the LPP. The location server may provide information related to the reception TEG(s) to the UE through the LPP. Thereafter, the location server may receive the measurement report transmitted by the UE, check the reception TEG-related information included in the received measurement report, acquire information about the reception TEG applied to each RSPD measurement, and perform positioning based on the information.

According to Proposal 2-2, since the structure of the reception TEG defined in the existing NR positioning is reused to control the reception phase errors, the increase in signaling overhead that may otherwise occur additionally may be reduced.

### [Proposal 3] Definition of DL RSPD measurement

To support positioning using CPP, the RSPD measurement that the UE may report is defined and related operations of the BS and UE are proposed below.

DL RSPD measurement may be defined as a phase difference between (at least) a pair of phase measurements measured by the UE based on DL PRS resources received at a specific time or within a certain period. In this case, for the phase measurements adopted, PRS resources belonging to different TRPs (e.g., PRS resources with different TRP IDs) may be used. To obtain the phase measurements, one PRS resource may be selected/configured per TRP, or multiple PRS resources that satisfy a specific condition may be used. The specific condition may include a condition that the PRS resources are receivable within a period in which phase continuity is guaranteed at the same time or between PRS resources (e.g., a period in which the influence of initial phase errors such as the initial phase error is remains the same or within a certain range), and/or a condition that the same initial transmission phase error may be assumed for the PRS resources. In this case, the phase measurements may need to be performed such that the same initial transmission phase error is guaranteed for the PRS resources. As specific condition for assuming the same initial transmission phase error, the condition for the transmission PEG or the condition for a transmission TEG with a margin of 0 Tc as proposed in the present disclosure may be used. As a specific condition for assuming the same initial reception phase error, the condition for a reception PEG or the condition for a reception TEG as proposed in the present disclosure may be used.

The time condition (i.e., a specific time or a certain time period) required to measure the DL RSPD may be determined based on a specific TRP among the TRPs having PRS resources targeted for DL RSPD measurement. As a specific example, the time at which the phase measurement for the PRS resource transmitted by a specific TRP (the TRP that determines the reference time for the RSPD measurement) is performed may be determined/set as the reference time. In this case, the time at which the phase measurement for the PRS resource transmitted by the other TRP paired with the specific TRP may be restricted to the same time as the reference time, or may be set as a time interval satisfying a specific condition with respect to the reference time. The specific condition may be determined by the condition that the reception phase continuity of the UE is maintained (e.g., the initial reception phase error is maintained or assumed to change only within a specific margin). It may be determined by the UE according to the capability or situation of the UE, or may be set by the upper node (e.g., BS or LMF) and indicated or recommended for the UE.

For example, to satisfy the phase continuity condition, the target RS(s) may need to be transmitted and received through a single RF chain. For example, regarding Rx-Tx time difference measurement, the UE may aggregate positioning frequency layers (PFLs). In this case, all target PFLs must be transmitted through one transmission chain of the TRP and the same antenna reference point. Regarding Rx-Tx time difference measurement, the TRP may aggregate PFLs. In this case, all target PFLs must be transmitted through one transmission chain of the UE and the same antenna reference point. Also, regarding RSTD measurement, the UE may aggregate PFLs. In this case, all target PFLs must be transmitted through the common RF components or common RF bandwidth of the TRP and the same antenna reference point.

Maintaining phase continuity of the UE may be related to coverage enhancement (CE). For example, regarding CE, phase continuity may need to be maintained within a time window, but the maintenance of phase continuity may end based on occurrence of a specific event. The specific event may include at least one: i) an event of monitoring TDD related DL slots/receptions; ii) an event where the gap between consecutive UL transmissions exceeds a specific number of symbols or another UL transmission is scheduled; iii) an event where at least one of the repeated UL transmissions is canceled/dropped; iv) an event where consecutive UL repeated transmissions are associated with different SRS resource sets; different spatial relations, or different power control parameters; v) a UL TA adjustment event; and vi) a frequency hopping event.

The above events may be related to phase continuity related to UL.

According to one embodiment, cases where phase continuity cannot be maintained in RSCPD measurement through DL PRS reception may include, but are not limited to, at least one of the following:

- UL slot or UL transmission for (TDD-related) unpaired spectrum;
- A gap exceeding a threshold (e.g., XX symbols, YY slots, ZZ ms, etc.) between two PRS receptions for RSCPD measurement;
- Scheduling of different DL receptions or DL monitoring between two PRS receptions for RSCPD measurement;
- DL frequency hopping or DL BWP switching between two PRS receptions for RSCPD measurement.

Proposal 3 may define the agreed operations of the UE, BS, and LMF to minimize the influence of possible phase errors on RSPD measurement in execution of CPP, thereby obtaining advantageous effects related to ensuring high positioning accuracy of CPP.

FIG. 16 is a diagram illustrating an RSCPD-related procedure for positioning in a wireless communication system according to an embodiment. A network may include one or more BSs/TRPs.

Referring to FIG. 16, the UE may receive RRC signaling from the network at least once. The RRC signaling may include positioning-related configuration. The positioning-related configuration may include, for example, at least one of: i) DL PRS resource (set) configuration, ii) measurement configuration for positioning, and iii) measurement report configuration. The measurement configuration for positioning may include configuration for CPM for DL PRS. The measurement report configuration may include configuration for reporting of RSCPD calculated based on the CPM. At least one of ii) the measurement configuration for positioning and iii) the measurement report configuration may include information related to determination of DL Rx phase continuity of the UE.

The network may transmit a DL PRS according to the DL PRS resource (set) configuration at each time point (A10, A11, A13).

The UE may measure a carrier phase for the DL PRS based on the measurement configuration for positioning (A15, A16, A17), and may calculate at least one value of an RSCPD based thereon (A20).

Based on the measurement report configuration, the UE may transmit a measurement report containing the at least one RSCPD value (A25).

The value of the RSCPD may be calculated based on the difference between phase measurement values at a pair of time points. The pair of time points for calculation of the value of the RSCPD may be included a time window in which DL Rx phase continuity of the UE is maintained.

In FIG. 16, it is assumed that the time point of the CPM (A15) and the time points of the CPM (A16) belong to phase continuity time window #1, and the time point of the CPM (A16) belongs to phase continuity time window #2. Thus, the UE may calculate the value of the RSCPD based on the difference between the CPM (A15) and the CPM (A16). On the other hand, the UE may be defined/configured not to calculate an RSCPD value between the time points of the CPM (A16) and the CPM (A15) (or CPM (A16)) measured in different phase continuity time windows.

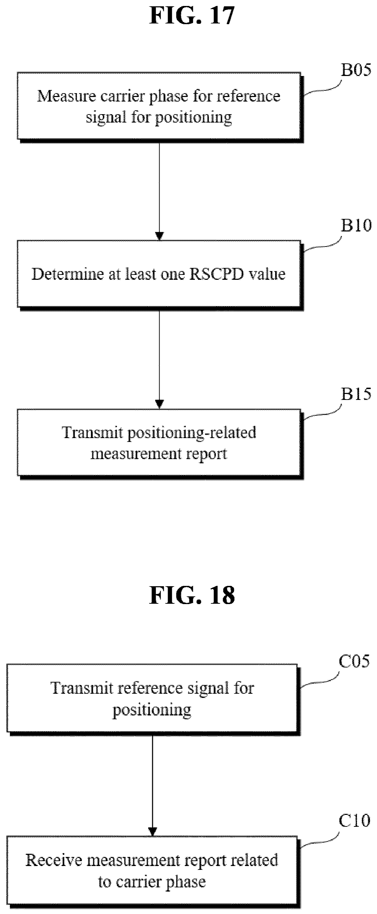

FIG. 17 illustrates a flow of a method of transmitting a measurement report according to an embodiment.

Referring to FIG. 17, the UE may measure a carrier phase for a reference signal for positioning at each of a plurality of time points (B05).

The UE may determine at least one reference signal carrier phase difference (RSCPD) value based on the measurement of the carrier phase (B10).

The UE may transmit a positioning-related measurement report containing the at least one RSCPD value (B15).

Each of the at least one RSCPD value may be determined based on time points at which phase continuity of the the UE is maintained among the plurality of time points.

The UE may determine that the phase continuity is maintained for time points belonging to a time interval in which a change in an initial phase error is less than a threshold.

The time points at which the phase continuity is maintained may include a reference time point.

Each of the at least one RSCPD value may be determined based on a difference between a phase measurement value at the reference time point and a phase measurement value at another time point paired with the reference time point.

The reference time point may be a time point at which the reference signal for positioning is received from a reference transmission and reception point (TRP) among one or more TRPs transmitting the reference signal for positioning.

The number of symbols included in a time gap between the reference time point and the other time poin may be less than or equal to a specific number.

The UE may determine that the phase continuity is not maintained based on at least one of (i) uplink transmission on an unpaired spectrum, (ii) downlink reception scheduling or downlink monitoring occurring between two time points for phase measurement, or (iii) downlink frequency hopping or downlink bandwidth part switching occurring between the two time points for the phase measurement.

The measurement report may contain identification information related to a reference RS resource related to the at least one RSCPD value.

The reference signal resource may be the same for all of the at least one RSCPD value.

FIG. 18 illustrates a flow of a method of receiving a measurement report from a UE by a device including at least one TRP according to an embodiment.

Referring to FIG. 18, the device including the at least one TRP may transmit a reference signal for positioning at a plurality of time points (C05).

The device including the at least one TRP may receive, from the UE, a measurement report related to a carrier phase of the reference signal for positioning measured at each of the plurality of time points (C10). The measurement report may contain at least one reference signal carrier phase difference (RSCPD) value.

Each of the at least one RSCPD value may be determined based on time points at which phase continuity of the UE is maintained among the plurality of time points at which the carrier phase is measured.

The phase continuity may be maintained for time points belonging to a time interval in which a change in an initial phase error is less than a threshold.

The time points at which the phase continuity is maintained may include a reference time point.

Each of the at least one RSCPD value may be a difference between a phase measurement value at the reference time point and a phase measurement value at another time point paired with the reference time point.

The reference time point may be a time point related to time point at which the reference signal for positioning is transmitted from a reference transmission and reception point (TRP) among one or more TRPs transmitting the reference signal for positioning.

The number of symbols included in a time gap between the reference time point and the another time point may be less than or equal to a specific number

**[0207]** When (i) uplink transmission for an unpaired spectrum, (ii) downlink reception scheduling or downlink monitoring occurring between two time points for phase measurement, and (iii) downlink frequency hopping or downlink bandwidth part switching occurring between two time points for phase measurement are performed, the phase continuity may not be maintained.

The measurement report may contain identification information related to a reference RS resource related to the at least one RSCPD value.

The reference signal resource may be the same for all of the at least one RSCPD value.

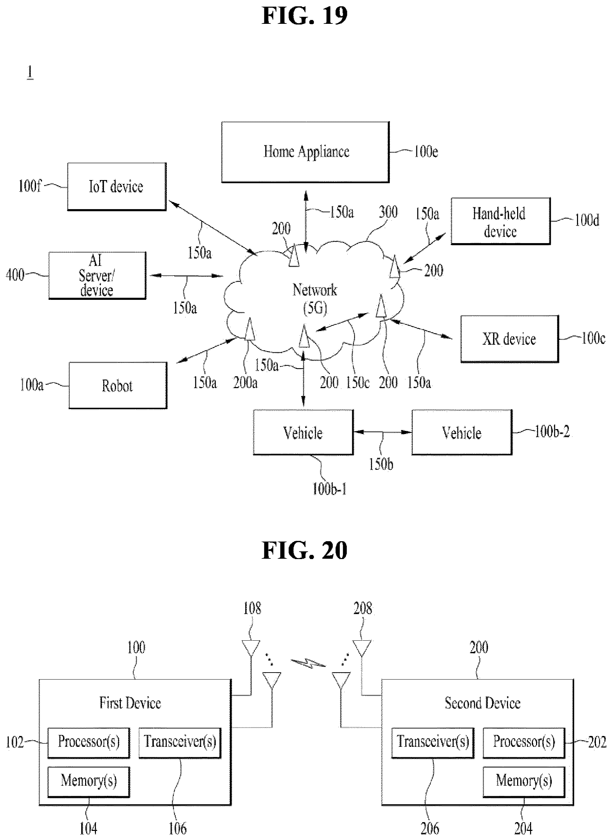

FIG. 19 illustrates a communication system 1 applied to the present disclosure.

Referring to FIG. 19, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 20 illustrates wireless devices applicable to the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

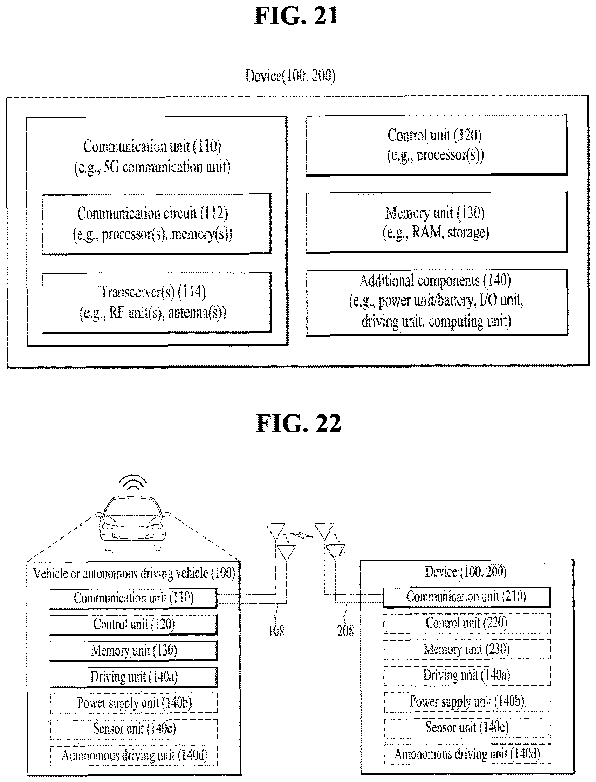

FIG. 21 illustrates another example of a wireless device applied to the present disclosure. The wireless device may be implemented in various forms according to a use-case/service (refer to FIG. 19).

Referring to FIG. 21, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 22 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 22, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The present disclosure is applicable to UEs, BSs, or other apparatuses in a wireless mobile communication system.

**Claims**

1. A method of transmitting a measurement report by a terminal in a wireless communication system, the method comprising:

   measuring a carrier phase for a reference signal for positioning at each of a plurality of time points;
   determining at least one reference signal carrier phase difference (RSCPD) value based on the measurement of the carrier phase; and
   transmitting a positioning-related measurement report containing the at least one RSCPD value,
   wherein each of the at least one RSCPD value is determined based on time points at which phase continuity of the terminal is maintained among the plurality of time points at which the carrier phase is measured.

2. The method of claim 1, wherein the terminal determines that the phase continuity is maintained for time points belonging to a time interval in which a change in an initial phase error is less than a threshold.

3. The method of claim 1, wherein the time points at which the phase continuity is maintained comprise a reference time point, and
   wherein each of the at least one RSCPD value is determined based on a difference between a phase measurement value at the reference time point and a phase measurement value at another time point paired with the reference time point.

4. The method of claim 3, wherein the reference time point is a time point at which the reference signal for positioning is received from a reference transmission and reception point (TRP) among one or more TRPs transmitting the reference signal for positioning.

5. The method of claim 3, wherein a number of symbols included in a time gap between the reference time point and the another time point is less than or equal to a specific number.

6. The method of claim 1, wherein the terminal determines that the phase continuity is not maintained based on at least one of (i) uplink transmission on an unpaired spectrum, (ii) downlink reception scheduling or downlink monitoring occurring between two time points for phase measurement, or (iii) downlink frequency hopping or downlink bandwidth part switching occurring between the two time points for the phase measurement.

7. The method of claim 1, wherein the measurement report contains identification information related to a reference RS resource related to the at least one RSCPD value.

8. The method of claim 7, wherein the reference RS resource is the same for all of the at least one RSCPD value.

9. A processor-readable recording medium having recorded thereon a program for performing the method of claim 1.

10. A device for wireless communication, the device comprising:

   a memory configured to store instructions; and
   a processor configured to perform operations by executing the instructions,
   wherein the operations of the processor comprise:

   measuring a carrier phase for a reference signal for positioning at each of a plurality of time points;
   determining at least one reference signal carrier phase difference (RSCPD) value based on the measurement of the carrier phase; and
   transmitting a positioning-related measurement report including the at least one RSCPD value,
   wherein each of the at least one RSCPD value is determined based on time points at which phase continuity of the device is maintained among the plurality of time points at which the carrier phase is measured.

11. The device of claim 10, further comprising a transceiver,
   wherein the device is a terminal operating in a wireless communication system.

12. The device of claim 10, wherein the device is a processing device configured to control a terminal operating in a wireless communication system.

13. A method of receiving, by an apparatus including at least one transmission and reception point (TRP), a measurement report from a terminal in a wireless communication system, the method comprising:

   transmitting a reference signal for positioning at a plurality of time points; and
   receiving, from the terminal, a measurement report related to a carrier phase of the reference signal for positioning measured at each of the plurality of time points,
   wherein the measurement report contains at least one reference signal carrier phase difference (RSCPD) value,
   wherein each of the at least one RSCPD value is determined based on time points at which phase continuity of the terminal is maintained among the plurality of time points at which the carrier phase is measured.

14. A processor-readable recording medium having recorded thereon a program for performing the method of claim 13.

15. An apparatus including at least one transmission and reception point (TRP), the apparatus comprising:

   at least one memory configured to store instructions; and
   at least one processor configured to perform operations by executing the instructions,
   wherein the operations of the at least one processor comprise:

   transmitting a reference signal for positioning at a plurality of time points; and
   receiving, from a terminal, a measurement report related to a carrier phase of the reference signal for positioning measured at each of the plurality of time points,
   wherein the measurement report contains at least one reference signal carrier phase difference (RSCPD) value,
   wherein each of the at least one RSCPD value is determined based on time points at which phase continuity of the terminal is maintained among the plurality of time points at which the carrier phase is measured.

EP 4 668 922 A1

# FIG. 1

| Initial Cell Search | System Information Reception | Random Access Procedure | | | | General DL/UL Tx/Rx S18 | |
|---|---|---|---|---|---|---|---|
| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |
| S11 | S12 | S13 | S14 | S15 | S16 | S17 | |

- DL/UL ACK/NACK
- UE CQI/PMI/Rank Report using PUSCH and PUCCH

# FIG. 2

...... One Frame (10ms) ......

...... Half-Frame (5ms) | Half-Frame (5ms) ......

...... Subframe 0 (1ms) ...... Subframe 4 (1ms) | Subframe 5 (1ms) ...... Subframe 9 (1ms) ......

Subframe (1ms)

| 15KHz | Slot (14 symbols) |
|---|---|

1ms

| 30KHz | Slot 0 (14 symbols) | Slot 1 |
|---|---|---|

500us

| 60KHz | Slot 0 (14 symbols) | Slot 1 | Slot 2 | Slot 3 |
|---|---|---|---|---|

250us

| 120KHz | Slot 0 (14 symbols) | Slot 1 | Slot 2 | Slot 3 | Slot 4 | Slot 5 | Slot 6 | Slot 7 |
|---|---|---|---|---|---|---|---|---|

125us

29

# FIG. 3

# FIG. 4

# FIG. 5

# FIG. 6

UL grant-to-PUSCH offset (K2)

PDCCH

PUSCH

# FIG. 7

Reference Source

GNSS signals (B)

LPP

Measurements(A,B or A+B) or Location

Assistance Data

Target Device

UE/SET

Location server

E-SMLC/SLP/LMF

- E-CID Location Information Transfer
- OTDOA Information Transfer
- Reporting of General Error Situations

radio signals (A)

NRPPa

Reference Source

ACCESS NODE / BS / TS / NG-RAN

# FIG. 8

# FIG. 9

(a)

(b)

## FIG. 10

**FIG. 11**

EP 4 668 922 A1

# FIG. 12

(a) BS mono - static

(b) BS bi-static

(c) BS-to-UE bi-static

(d) UE mono -static

(e) UE bi-static

(f) UE-to-BS bi-static

EP 4 668 922 A1

# FIG. 13

$\Delta\varphi_{tx-1}$

PRS resource #1

PRS resource #2

UE

$\Delta\varphi_{tx-2}$

# FIG. 14

$\Delta\varphi_{rx-1}$

PRS resource #1

UE

PRS resource #2

$\Delta\varphi_{rx-2}$

# FIG. 15

# FIG. 16

# FIG. 17

Measure carrier phase for reference signal for positioning — B05

Determine at least one RSCPD value — B10

Transmit positioning-related measurement report — B15

# FIG. 18

Transmit reference signal for positioning — C05

Receive measurement report related to carrier phase — C10

# FIG. 19

# FIG. 20

# FIG. 21

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 22

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108      208

Device (100, 200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| | International application No. |
|---|---|
| | **PCT/KR2024/095313** |

| A. | CLASSIFICATION OF SUBJECT MATTER |
|---|---|
| | **H04W 64/00**(2009.01)i; **H04L 5/00**(2006.01)i; **G01S 5/00**(2006.01)i; **H04W 24/08**(2009.01)i |

According to International Patent Classification (IPC) or to both national classification and IPC

| B. | FIELDS SEARCHED |
|---|---|

Minimum documentation searched (classification system followed by classification symbols)

H04W 64/00(2009.01); G01S 19/43(2010.01); G01S 19/51(2010.01); H04W 24/10(2009.01); H04W 36/00(2009.01); H04W 4/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 반송파 위상(carrier phase), RSCPD(reference signal carrier phase difference), 위상 연속성(phase continuity), TRP(transmission reception point), 포지셔닝(positioning), 참조 신호(reference signal)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2018-0217268 A1 (FURUNO ELECTRIC CO., LTD.) 02 August 2018 (2018-08-02)<br>　　See paragraphs [0021], [0023], [0027] and [0044]; and claims 7-8. | 1-15 |
| Y | WO 2021-227741 A1 (DATANG MOBILE COMMUNICATIONS EQUIPMENT CO., LTD.) 18 November 2021 (2021-11-18)<br>　　See page 16, line 29 - page 17, line 4 and page 18, lines 3-5; and claims 1-3. | 1-15 |
| Y | MODERATOR (CHINA TELECOM). [106-e-NR-R17-CovEnh-03] Summary of email discussion on joint channel estimation for PUSCH. R1-2108644, 3GPP TSG RAN WG1 #106-e. 02 September 2021.<br>　　See pages 3, 30 and 32. | 5-6 |
| Y | US 2021-0144600 A1 (TELEFONAKTIEBOLAGET LM ERICSSON (PUBL)) 13 May 2021 (2021-05-13)<br>　　See claims 1 and 9. | 7-8 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 May 2024** | **28 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/095313**

| C. | DOCUMENTS CONSIDERED TO BE RELEVANT | |
|---|---|---|
| Category* | Citation of document, with indication, where appropriate, of the relevant passages | Relevant to claim No. |
| A | CN 114761832 A (BEIJING XIAOMI MOBILE SOFTWARE CO., LTD.) 15 July 2022 (2022-07-15) See paragraphs [0070], [0072], [0076] and [0098]. | 1-15 |

Form PCT/ISA/210 (second sheet) (July 2022)

## INTERNATIONAL SEARCH REPORT
### Information on patent family members

International application No.

**PCT/KR2024/095313**

| Patent document cited in search report | | | Publication date (day/month/year) | Patent family member(s) | | | Publication date (day/month/year) |
|---|---|---|---|---|---|---|---|
| US | 2018-0217268 | A1 | 02 August 2018 | JP | 6549230 | B2 | 24 July 2019 |
| | | | | US | 10705226 | B2 | 07 July 2020 |
| | | | | WO | 2017-022390 | A1 | 09 February 2017 |
| WO | 2021-227741 | A1 | 18 November 2021 | CN | 113676830 | A | 19 November 2021 |
| | | | | CN | 113676830 | B | 02 September 2022 |
| | | | | CN | 115379382 | A | 22 November 2022 |
| | | | | EP | 4152776 | A1 | 22 March 2023 |
| | | | | EP | 4152776 | A4 | 27 September 2023 |
| | | | | US | 2023-0180040 | A1 | 08 June 2023 |
| US | 2021-0144600 | A1 | 13 May 2021 | CN | 110870348 | A | 06 March 2020 |
| | | | | CN | 110870348 | B | 11 March 2022 |
| | | | | EP | 3619951 | A1 | 11 March 2020 |
| | | | | EP | 3619951 | B1 | 24 August 2022 |
| | | | | US | 11064406 | B2 | 13 July 2021 |
| | | | | WO | 2018-202770 | A1 | 08 November 2018 |
| CN | 114761832 | A | 15 July 2022 | WO | 2023-168716 | A1 | 14 September 2023 |

Form PCT/ISA/210 (patent family annex) (July 2022)